# EUROPÄISCHE PATENTSCHRIFT

(11) **EP 1 530 707 B1**
(45) Veröffentlichungstag und Bekanntmachung des Hinweises auf die Patenterteilung: **23.12.2009**
(21) Anmeldenummer: 03792337.2
(22) Anmeldetag: 16.08.2003
(51) Int. Cl.: G01L 1/12

(54) **VERFAHREN ZUR SPANNUNGS-/DEHNUNGSMESSUNG MITTELS BARKHAUSENRAUSCHEN**
METHOD FOR MEASURING STRESS/STRAIN USING BARKHAUSEN NOISES
PROCEDE POUR MESURER UNE TENSION / EXTENSION PAR LE BRUIT BARKHAUSEN

(30) Priorität: 20.08.2002 DE 10239017
(43) Veröffentlichungstag der Anmeldung: 18.05.2005
(73) Patentinhaber: EADS Deutschland GmbH, 85521 Ottobrunn (DE); Airbus Deutschland GmbH, 21129 Hamburg (DE)
(72) Erfinder: ZIMMERMANN, Werner, 85640 Putzbrunn (DE); HALM, Jürgen, 27777 Ganderkesee (DE)
(86) Internationale Anmeldenummer: PCT/EP2003/009085
(87) Internationale Veröffentlichungsnummer: WO 2004/018985

(56) Entgegenhaltungen:
- US-A- 4 634 976
- US-A- 4 931 730
- US-A- 4 977 373
- PATENT ABSTRACTS OF JAPAN vol. 2002, no. 06, 4. Juni 2002 (2002-06-04) & JP 2002 039932 A (TOYOTA CENTRAL RES & DEV LAB INC), 6. Februar 2002 (2002-02-06)

## Beschreibung

Die vorliegende Erfindung betrifft ein Verfahren zur Spannungs-/Dehnungsmessung mittels Barkhausenrauschen. Die Erfindung findet beispielsweise Anwendung zur Spannungs-/Dehnungsmessung von Bolzen oder Nieten am Flügel oder Rumpf eines Flugzeuges, insbesondere während Wartungsarbeiten.

Bisher wurden z.B. zum Anziehen von Bolzen Drehmomentschlüssel verwendet, bei gleichzeitiger Bestimmung der inneren Spannungen im Bolzen mittels Ultraschall-Geschwindigkeitsmessung. Dies setzt jedoch voraus, dass der Bolzen mit einem Piezoelektrikum beschichtet oder beklebt ist, was den Bolzen erheblich verteuert.

Zudem ist bekannt, mikromagnetische Verfahren und Sensoren, die auf dem Barkhausenrauschen basieren, zur Detektion von Materialveränderungen durch Bearbeitungsprozesse einzusetzen. Hierbei wird die Kenntnis ausgenutzt, dass die magnetische Struktur der Werkstoffe von den Materialeigenschaften beeinflusst wird. Kristallitgrenzen und andere Inhomogenitäten wie Versetzungen, Fremdatome und Einschlüsse behindern die Bewegung der sogenannten Bloch-Wände. Das Ablösen der Wände von Inhomogenitäten führt zu Sprüngen in der Magnetisierung, dem sogenannten Barkhausenrauschen. Mit einer Spule können diese ruckartigen Bewegungen der Bloch-Wände in Form kurzer elektrischer Impulse registriert werden. Die Anzahl, Höhe und Intensität der Impulse ist dabei material- und zustandsabhängig.

Ein derartiges Verfahren zur zerstörungsfreien Materialcharakterisierung ferromagnetischer Stoffe ist beispielsweise in DE 196 31 311 C2 oder in US-A-4931730 beschrieben. Das Messprinzip basiert darauf, dass bei periodischer Ummagnetisierung eines Ferromagneten die magnetische Domainstruktur kontinuierlich verändert wird. Begrenzungen zwischen Bereichen gleicher Magnetisierung (d.h. Bloch-Wände) bewegen sich bei Magnetisierungsänderung durch das Werkstoffgefüge und treten mit der Mikrostruktur des Werkstoffes in Wechselwirkung. Diese Wechselwirkung wird als elektromagnetisches Signal - dem sogenannten Barkhausenrauschen - empfangen.

Derartige auf einer Analyse des Barkhausenrauschens basierende Verfahren werden im Allgemeinen bei der Qualitätskontrolle eingesetzt. Sie werden z.B. für die Optimierung verschiedener Bearbeitungssprozesse (Schleifen, Wärmebehandeln etc.) von Bauteilen eingesetzt. Die Bauteile können z.B. geschliffene Teile, Nockenwellen, Kurbelwellen, Lager, Zahnräder, Einspritzventile und zahlreiche andere Teile aus der Automobiltechnik sowie der Luft- und Raumfahrt sein.

Aufgabe der Erfindung ist es, ein Verfahren zur Spannungs-/Dehnungsmessung zu schaffen, das schnell und mit geringem apparativem Aufwand in der Lage ist, insbesondere Spannungs-/Dehnungszustände von Befestigungsmitteln zu bestimmen.

Die Aufgabe wird erfindungsgemäß dadurch gelöst, dass ein Erreger-/Sensormittel zumindest benachbart zu einem magnetischen oder magnetisierbaren Element - vorzugsweise zumindest in einem Teilbereich um das magnetische oder magnetisierbare Element - angeordnet wird; dass das Erregermittel mit einem ansteigenden Magnetisierungsstrom beaufschlagt wird; dass das Einsetzen des Barkhausenrauschens in dem Element in Abhängigkeit des Magnetisierungsstromes mit Hilfe des Sensormittels erfasst wird, wobei das Einsetzen des Barkhausenrauschens ein Maß für den Spannungs-/Dehnungszustand des Elements ist. Zweckmäßigerweise wird dabei das Einsetzen des Barkhausenrauschens durch Vergleichsmessung mit Referenzwerten ermittelt.

Die Erfindung hat den Vorteil, dass der physikalische Effekt des Barkhausenrauschens auf effektive Weise ausgenutzt wird. Der Spannungs-/Dehnungszustand eines magnetischen bzw. magnetisierbaren (vorzugsweise ferromagnetischen) Elements wird durch einfaches Anbringen eines Erreger-/Sensormittels berührungslos bestimmt. Dabei wird das Element durch das vom Erregermittel erzeugte Magnetfeld magnetisiert und das Sensormittel erfasst das Barkhausenrauschen.

Es ist besonders zweckmäßig, das Erreger-/ Sensormittel einstückig auszubilden, vorzugsweise durch eine einzige Spule, die gleichzeitig als Erregermittel und Sensormittel dient. Das Sensormittel erfasst dabei den Magnetisierungsstrom, bei dem das Barkhausenrauschen auftritt, wobei der Magnetisierungsstrom proportional zur inneren Spannung im Element ist. Eine derartige Anordnung hat den Vorteil, dass der apparative Aufwand so gering wie möglich gehalten wird.

Gemäß einer alternativen Ausführungsform wird das Erregermittel wiederum durch eine Spule ausgebildet. Das Sensormittel zum Erfassen des Barkhausenrauschens ist jedoch ein akustischer oder interferometrischer Detektor. Derartige Sensoren zeichnen sich insbesondere durch kleine Abmessungen vorteilhaft aus.

Zweckmäßigerweise wird ein gepulster Magnetisierungsstrom verwendet, wobei das Sensormittel während der Auszeit der Impulse auf Empfang für das Barkhausenrauschen gestellt wird. Dies hat den Vorteil, dass höhere magnetische Felder erzeugt werden können, ohne das Erregermittel thermisch zu überlasten.

Gemäß einer bevorzugten Ausführungsform ist es vorteilhaft, zwischen dem magnetischen oder magnetisierbaren Element und einer damit in Verbindung zu bringenden Struktur (z.B. einem Bauteil) ein Zwischenelement aus nichtmagnetischem oder nichtmagnetisierbarem Material anzuordnen. Das magnetische oder magnetisierbare Element ist beispielsweise ein Befestigungsmittel in Form eines Bolzens und das Zwischenelement kann eine Unterlegscheibe oder Ähnliches sein. Vorteilhaft bei dieser Ausführungsform ist, dass die auf Grund der Befestigung in dem Befestigungsmittel bestehenden Spannungen direkt gemessen werden. Die Unterlegscheibe ist optional und besteht vorzugsweise aus nichtferromagnetischem Material.

Gemäß einer alternativen Ausführungsform ist es zweckmäßig, dass ein magnetisches oder magnetisierbares Element zunächst zwischen ein nichtmagnetisches oder nichtmagnetisierbares Befestigungsmittel und einer damit in Verbindung zu bringenden Struktur angeordnet wird. Vorteilhafterweise können somit auch Spannungs-/Dehnungszustände eines nicht magnetischen Befestigungsmittels bestimmt werden, da die von dem Befestigungsmittel auf ein vorzugsweise ferromagnetisches Element (z.B. Unterlegscheibe) übertragenen mechanischen Spannungen gemessen werden.

Das erfindungsgemäße Verfahren findet bevorzugt bei der Messung von Spannungs-/Dehnungszuständen von Befestigungsmitteln (z.B. geschraubte oder gesteckte Bolzen, Nieten etc.) Anwendung. Das Verfahren ist vielfältig einsetzbar, beispielsweise bei der Wartung von Flugzeugen, Hubschraubern, Kraftfahrzeugen etc.

Nachstehend wird die Erfindung anhand der beigefügten Abbildungen in näheren Einzelheiten beschrieben; in denen zeigen:
- **Fig. 1**: eine schematische Darstellung einer bevorzugten Anordnung zur Durchführung des erfindungsgemäßen Verfahrens;
- **Fig. 2**: Darstellungen experimenteller Messwerte des Barkhausenrauschens;
- **Fig. 3**: eine schematische Darstellung einer zu Fig. 1 alternativen Messanordnung; und
- **Fig. 4**: eine schematische Darstellung einer alternativen Messanordnung an Hand einer genieteten Verbindung.

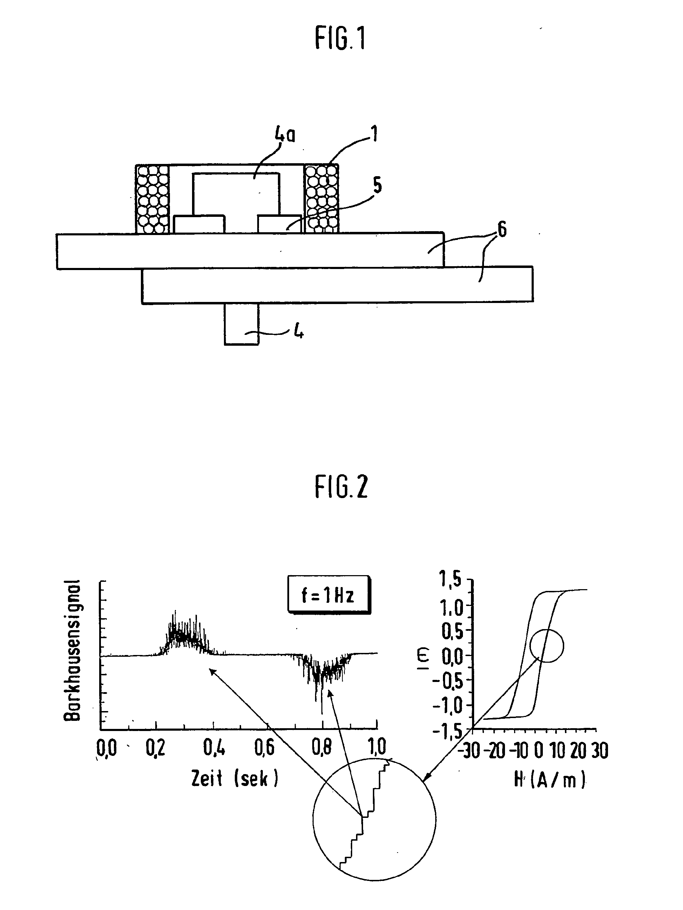

Fig. 1 zeigt einen Bolzen 4, der mit einer Struktur 6 in Verbindung steht. In der Regel dient der Bolzen 4 zur Befestigung, Fixierung oder Halterung der Struktur, welche mehrere Bauteile umfassen kann. Die Verbindung zwischen Bolzen 4 und Struktur 6 kann geschraubt, genietet, gesteckt oder dergleichen sein. Bei dem in Fig. 1 gezeigten geschraubten Bolzen ist in der Regel eine Unterlegscheibe 5 zwischen dem Kopf 4a des Bolzens und der Struktur 6 angeordnet.

Zur Bestimmung des Spannungs-/Dehnungszustandes des Bolzens 4 wird in einem ersten Schritt die in Fig. 1 mit Bezugsziffer 1 bezeichnete Spule über den Kopf 4a des Bolzens gestülpt. Die Spule 1 kann jedoch auch auf den Kopf 4a aufgesetzt sein oder benachbart zum Bolzen 4 angeordnet sein. Die Spule 1 dient gemäß einer bevorzugten Ausführungsform sowohl zur Erzeugung eines Magnetfeldes als auch zur Detektion des Barkhausenrauschens, was im folgenden in näheren Einzelheiten beschrieben wird. Anstelle der einzelnen Spule 1 können aber auch separate Komponenten verwendet werden; beispielsweise eine erste Spule, die zur Erzeugung des Magnetfeldes dient, sowie eine zweite Spule, die zur Erfassung des Barkhausenrauschsignals dient. Im Folgenden wird auf die alternative Ausführungsform, bei der die Erregerspule mit Bezugsziffer 2 und die Sensorspule mit Bezugsziffer 3 bezeichnet wird, jeweils durch In-Klammern-Setzen der entsprechenden Komponenten Bezug genommen.

Die Spule 1 (bzw. die Erregerspule 2) dient zunächst als Magnetisierungsspule und wird mit einem Magnetisierungsstrom zur Erzeugung eines Magnetfeldes erregt. Besteht der Bolzen 4 aus ferromagnetischem Material, so bewirkt das Magnetisierungsfeld, dass die Elementarmagnete durch das Magnetfeld der stromdurchflossenen Spule 1 (bzw. der Erregerspule 2) ausgerichtet werden. Bekanntlich ist das Umklappen der Elementarmagnete ein sprunghafter Vorgang (s. Fig. 2), der eine Änderung des magnetischen Flusses zur Folge hat, wodurch in der Spule 1 (bzw. der Sensorspule 3) eine Spannungsänderung induziert wird. Dabei ist der Beginn des Umklappens bzw. Ausrichtens der Elementarmagnete abhängig von der Magnetisierungsfeldstärke bzw. vom Magnetisierungsstrom sowie von inneren mechanischen Spannungen im Material. Eine an den Bolzen 4 angelegte Zugspannung wirkt dabei der Ausrichtung der Elementarmagnete entgegen bzw. die Elementarmagnete beginnen wieder in ihre ursprüngliche Ausrichtung umzuklappen. Dieses Umklappen der einzelnen Elementarmagnete erzeugt wiederum eine Änderung des magnetischen Flusses, wodurch in der Spule 1 (bzw. in der Sensorspule 3) Ströme induziert werden (sogenanntes Barkhausenrauschen). Da die zur Magnetisierung des Bolzens 4 notwendige magnetische Feldstärke bzw. der Magnetisierungsstrom auch eine Funktion der inneren mechanischen Spannung ist, kann der Spannungs-/Dehnungszustand des Bolzens 4 ermittelt werden. Mit anderen Worten, ein kontinuierlich ansteigender Magnetisierungsstrom erzeugt ein stetig ansteigendes Magnetfeld in der Spule 1 (bzw. der Erregerspule 2), wobei der bei Beginn des Barkhausenrauschens anliegende Magnetisierungsstrom ein Maß für die am Bolzen 4 anliegende Zugspannung ist.

In der Regel wird ein gepulster Magnetisierungsstrom verwendet, um die thermische Belastung der Spule 1 (bzw. der Erregerspule 2) so gering wie möglich zu halten. Gleichzeitig wird das Einsetzen des Barkhausenrauschens in Abhängigkeit des Magnetisierungsstromes durch die Spule 1 (bzw. durch die Sensorspule 3) überwacht. Die Messung erfolgt induktiv, wobei die Spule 1 jeweils während der Auszeit der Impulse des Magnetisierungsstromes auf Empfang für das Barkhausenrauschen gestellt ist. Zur genauen Bestimmung des Spannungs-/Dehnungszustandes werden als Referenz Vergleichsmessungen herangezogen, die zuvor an Bolzen (bzw. Nieten etc.) aus gleichem Material und gleicher Geometrie ermittelt wurden. Der Spannungs-/Dehnungszustand wird also durch Vergleichmessungen mit zuvor bestimmen und beispielsweise in einer Tabelle elektronisch abgelegten Messwerten bestimmt.

Ferner ist anzumerken, dass bei der Messung des Spannungs-/Dehnungszustandes eines z.B. ferromagnetischen Bolzens eine Unterlegscheibe aus nichtmagnetischem bzw. nichtmagnetisierbarem Material verwendet werden sollte, die nachstehend analog zu Fig.1 mit Bezugsziffer 5' bezeichnet wird.

Zudem kann mit dem erfindungsgemäßen Verfahren auch der Spannungs-/ Dehnungszustand eines nichtmagnetischen oder nichtmagnetisierbaren Bolzens bestimmt werden, der analog zur bisherigen Bezeichnungsweise nachstehend mit Bezugsziffer 4' bezeichnet wird. In diesem Fall wird eine Unterlegscheibe 5 aus magnetischem oder magnetisierbarem Material verwendet, so dass mit dem oben beschriebenen Messverfahren die vom Bolzen 4' auf die Unterlegscheibe 5 übertragene Spannung in entsprechender Weise bestimmt wird.

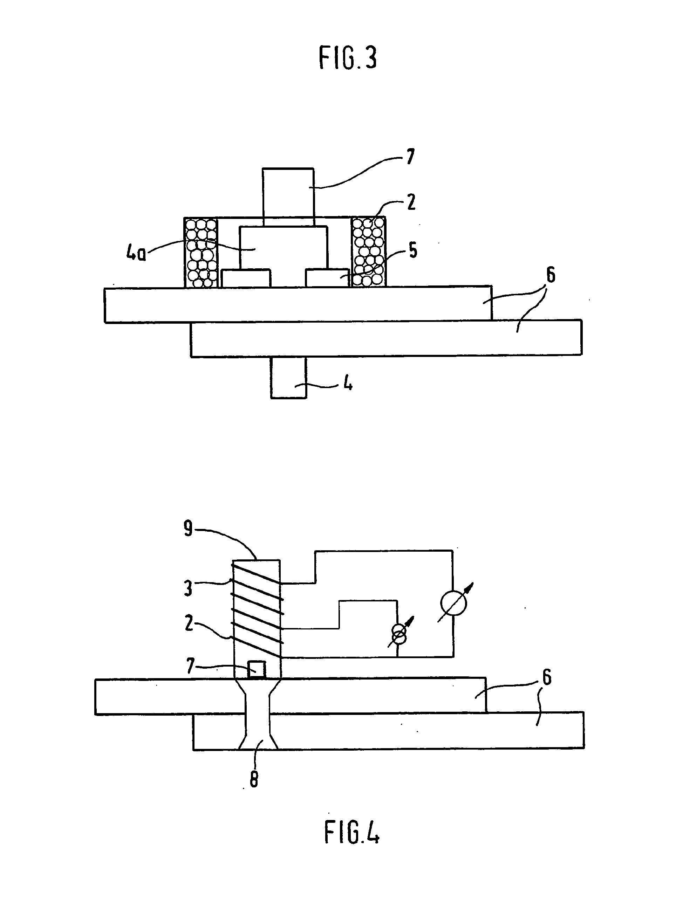

Alternativ kann das Barkhausenrauschen anstelle auf induktive Weise mittels Sensorspule 3 durch einen akustischen oder interferometrischen Detektor 7 erfasst werden, was in Fig. 3 schematisch dargestellt ist. Das der Erfindung zugrundeliegende Prinzip ist unverändert, lediglich das Barkhausenrauschen wird auf andere Weise erfasst. Der Detektor 7 kann beispielsweise ein Mikrophon oder ein Piezoelement sein, um nur einige Beispiele zu nennen.

Fig. 4 zeigt eine weitere alternative Messanordnung am Beispiel einer Nietverbindung. Die Niete ist in Fig. 4 mit Bezugsziffer 8 bezeichnet und die damit versehene Struktur, entsprechend zur Bezeichnungsweise in Fig. 1 bzw. Fig. 3, mit Bezugsziffer 6. In Fig. 4 sind ferner Erregerspule 2 und Sensorspule 3 separat, als Spulenwicklungen um einen Kern 9 dargestellt. Die Erregerspule 2 wird wiederum mit einer variablen Magnetisierung beaufschlagt und die Sensorspule 3 erfasst induzierte Spannungen durch Umklappen der Domänen. Anstelle der Sensorspule 3 kann auch hier zur Detektion des Barkhausenrauschens ein akustischer oder interferometrischer Detektor 7 verwendet werden.

## Patentansprüche

1. Verfahren zur Spannungs-/Dehnungsmessung von magnetischen oder magnetisierbaren Elementen mittels Barkhausenrauschen, wobei ein Erreger-/Sensormittel (1: 2, 3; 2, 7) zumindest benachbart zu einem magnetische oder magnetisierbaren Element (4; 5) angeordnet wird, das Erregermittel (1; 2) mit einem Magnetisierungsstrom beaufschlagt wird, und das Barkhausenrauschen mit Hilfe des Sensormittels (1; 3; 7) erfasst wird, **dadurch gekennzeichnet dass** das Erregermittel (1; 2) mit einem kontinuierlich ansteigenden Magnetisierungsstrom beaufschlagt wird;dass der Magnetisierungsstrom bei Einsetzen des Barkhausenrauschens erfasst und der Spannungs-/Dehnungsustand des Elements (4; 5) mittels Referenzmesswerten von Vergleichsmessungen ermittelt wird.

2. Verfahren nach Anspruch 1, **dadurch gekennzeichnet, dass** das Erreger-/Sensormittel (1; 2, 3, 2, 7) zumindest teilweise das magnetische oder magnetisierbare Element (4; 5) umgebend angeordnet wird.

3. Verfahren nach Anspruch 1 oder 2, **dadurch gekennzeichnet, dass** ein gepulster Magnetisierungsstrom verwendet wird, wobei das Sensormittel (1; 3; 7) während der Auszeit der Impulse das Signal des Barkhausenrauschens erfasst.

4. Verfahren nach einem der Ansprüche 1 bis 3, **dadurch gekennzeichnet, dass** zwischen dem magnetischen oder magnetisierbaren Element (4) und einer damit in Verbindung zu bringenden Struktur (6) ein Zwischenelement (5') aus nichtmagnetischem oder nichtmagnetisierbarem Material angeordnet wird.

5. Verfahren nach einem der Ansprüche 1 bis 3, **dadurch gekennzeichnet, dass** das magnetisierbare oder Element (5) vor Bestimmung seines Spannungs-/Dehnungszustandes zwischen ein nichtmagnetisches oder nichtmagnetisierbares Befestigungselement (4') und einer damit in Verbindung au bringenden Struktur (6) angeordnet wird.

6. Verfahren nach einem der vorangegangenen Ansprüche, **dadurch gekennzeichnet, dass** der Magnetisierungsstrom proportional zur inneren Spannung des Elements (4; 5) ist.

7. Verwendung des Verfahren nach einem der vorangegangenen Ansprüche zur Messung von Spannungs-/Dehnungszuständen in geschraubten, gesteckten oder genieteten Befestigungsmitteln.

## Claims

1. Method for measuring stress/strain of magnetic or magnetizable elements using Barkhausen noise, an exciter/sensor means (1; 2, 3; 2, 7) being arranged such that it is at least adjacent to a magnetic or magnetizable element (4; 5), a magnetization current being applied to the exciter means (1; 2), and the Barkhausen noise being detected with the aid of the sensor means (1; 3; 7), **characterized in that** a continuously rising magnetization current is applied to the exciter means (1; 2); **in that** the magnetization current is detected when the Barkhausen noise starts, and **in that** the stress/strain state of the element (4; 5) is determined using reference measured values from comparison measurements.

2. Method according to Claim 1, **characterized in that** the exciter/sensor means (1; 2, 3; 2, 7) is arranged such that it at least partially surrounds the magnetic or magnetizable element (4; 5).

3. Method according to Claim 1 or 2, **characterized in that** a pulsed magnetization current is used, the sensor means (1; 3; 7) detecting the Barkhausen noise signal during the off time of the pulses.

4. Method according to one of Claims 1 to 3,
**characterized in that** an intermediate element (5') made of non-magnetic or non-magnetizable material is arranged between the magnetic or magnetizable element (4) and a structure (6) to be connected to the latter.

5. Method according to one of Claims 1 to 3, **characterized in that**, before its stress/strain state is determined, the magnetic or magnetizable element (5) is arranged between a non-magnetic or non-magnetizable fastening element (4') and a structure (6) to be connected to the latter.

6. Method according to one of the preceding claims, **characterized in that** the magnetization current is proportional to the internal voltage of the element (4; 5).

7. Use of the method according to one of the preceding claims for measuring stress/strain states in screwed, plugged or riveted fastening means.

## Revendications

1. Procédé de mesure de la tension/extension d'éléments magnétiques ou magnétisables au moyen du bruit de Barkhausen, un moyen d'excitation/détection (1 ; 2, 3 ; 2, 7) étant disposé au moins dans le voisinage d'un élément magnétique ou magnétisable (4 ; 5), le moyen d'excitation (1 ; 2) étant soumis à un courant de magnétisation et le bruit de Barkhausen étant détecté à l'aide du moyen de détection (1 ; 3 ; 7), **caractérisé en ce que** le moyen d'excitation (1 ; 2) est soumis à un courant de magnétisation qui croît continuellement ; que le courant de magnétisation est détecté lors de l'amorçage du bruit de Barkhausen et l'état de tension/extension de l'élément (4 ; 5) est déterminé au moyen de valeurs mesurées de référence obtenues par des mesures comparatives.

2. Procédé selon la revendication 1, **caractérisé en ce que** le moyen d'excitation/détection (1 ; 2, 3 ; 2, 7) est disposé de manière à entourer au moins partiellement l'élément magnétique ou magnétisable (4 ; 5).

3. Procédé selon la revendication 1 ou 2,
**caractérisé en ce que** le courant de magnétisation employé est impulsionnel, le moyen de détection (1 ; 3 ; 7) détectant le signal du bruit de Barkhausen pendant le temps de pause de l'impulsion.

4. Procédé selon l'une des revendications 1 à 3, **caractérisé en ce qu'**un élément intermédiaire (5') en matériau non magnétique ou non magnétisable est disposé entre l'élément magnétique ou magnétisable (4) et une structure (6) à mettre en liaison avec celui-ci.

5. Procédé selon l'une des revendications 1 à 3, **caractérisé en ce que** l'élément magnétique ou magnétisable (5), avant de déterminer son état de tension/extension, est disposé entre un élément de fixation non magnétique ou non magnétisable (4') et une structure (6) à mettre en liaison avec celui-ci.

6. Procédé selon l'une des revendications précédentes, **caractérisé en ce que** le courant de magnétisation est proportionnel à la tension interne de l'élément (4 ; 5).

7. Utilisation d'un procédé selon l'une des revendications précédentes pour mesurer les états de tension/extension dans des moyens de fixation vissés, enfichés ou rivetés.
